# FASCICULE DE BREVET EUROPEEN

(11) **EP 0 803 804 B1**
(45) Date de publication et mention de la délivrance du brevet: **04.07.2001**
(21) Numéro de dépôt: 97400827.8
(22) Date de dépôt: 11.04.1997
(51) Int. Cl.: G06F 9/445

(54) **Equipement de calcul à mémoire amovible pour aéronef**
Recheneinrichtung mit abnehmbarem Speicher für ein Flugzeug
Computing apparatus with removable memory for aircraft

(30) Priorité: 25.04.1996 FR 9605213
(43) Date de publication de la demande: 29.10.1997
(73) Titulaire: AEROSPATIALE MATRA, 75016 Paris (FR)
(72) Inventeur: Terme, Jean-Louis, 31830 Plaisance du Touch (FR)
(74) Mandataire: Bonnetat, Christian

(56) Documents cités:
- EP-A- 0 489 227
- EP-A- 0 537 688
- EP-A- 0 606 771
- US-A- 5 367 571

## Description

La présente invention concerne les équipements de calcul embarqués à bord d'aéronefs.

On sait que, dans un tel équipement de calcul, le programme logiciel, destiné à implémenter les diverses fonctions que doit effectuer ledit équipement, est supporté par un bloc mémoire comprenant au moins une mémoire électronique non volatile, c'est-à-dire assurant la rémanence des informations qu'elle contient en l'absence d'alimentation électrique. On sait de plus que ce programme logiciel n'est pas figé dans le temps, mais que, au contraire, il subit des évolutions destinées à améliorer le fonctionnement dudit équipement.

Aussi, on est amené à modifier le programme logiciel dudit bloc mémoire.

Pour ce faire, la solution de base consiste à démonter ledit équipement de calcul de l'aéronef et à le rapatrier dans un atelier, où il est ouvert pour permettre le remplacement ou la reprogrammation dudit bloc mémoire, puis à remonter ledit équipement de calcul sur l'aéronef. Il va de soi qu'une telle solution n'est ni facile, ni rapide. De plus, elle est coûteuse, car la dépose de l'équipement de calcul entraîne l'indisponibilité momentanée, mais totale, de l'aéronef.

Pour remédier à ces inconvénients, on a été amené à modifier la structure desdits équipements de calcul embarqués. A cet effet, chaque équipement de calcul est constitué de deux parties distinctes reliées l'une à l'autre de façon amovible, la première de ces parties comportant, entre autres, l'unité centrale dudit équipement de calcul, des premiers moyens de connexion et un premier dispositif électronique d'interface disposé entre lesdits premiers moyens de connexion et ladite unité centrale, tandis que la seconde desdites parties comporte le bloc mémoire comprenant au moins une mémoire non volatile supportant tout ou partie du programme logiciel dudit équipement de calcul, des deuxièmes moyens de connexion complémentaires desdits premiers moyens de connexion et un second dispositif électronique d'interface disposé entre lesdits deuxièmes moyens de connexion et ledit bloc mémoire et susceptible de coopérer avec ledit premier dispositif électronique d'interface, à travers lesdits premiers et deuxièmes moyens de connexion.

Ainsi, ladite seconde partie peut être réalisée sous la forme d'un module, généralement appelé module OBRM (On Board Replaceable Module), pouvant être rapporté ou séparé de ladite première partie, de préférence par enfichage et emboîtement. Ce module OBRM, qui supporte ledit bloc mémoire, est donc physiquement extractible de ladite première partie comportant l'unité centrale. Lorsqu'une modification du programme logiciel doit être faite, cette modification peut être effectuée par simple échange d'un module OBRM par un autre, préalablement programmé en atelier. Grâce aux modules OBRM, on peut donc éviter d'avoir à déposer, déplacer, ouvrir, refermer et remonter l'équipement de calcul, comme cela a été décrit ci-dessus avec les inconvénients inhérents à un tel processus.

L'objet de la présente invention est de perfectionner un tel module OBRM pour améliorer encore plus le processus de modification du programme logiciel, tout en laissant inchangée ladite première partie dudit équipement de calcul, de sorte que le nouveau module perfectionné selon l'invention soit totalement compatible avec ladite première partie et puisse être simplement monté sur celle-ci à la place dudit module OBRM.

A cette fin, selon l'invention, l'équipement de calcul en deux parties, du type rappelé ci-dessus, est remarquable :
- en ce que ladite mémoire non volatile supportant ledit programme logiciel est effaçable et programmable électriquement ; et
- en ce que ladite seconde partie comporte de plus :
   . une mémoire de chargement associée audit bloc mémoire et supportant un programme de chargement pour introduire ledit programme logiciel dans ledit bloc mémoire ;
   . des troisièmes moyens de connexion permettant la connexion de ladite seconde partie à un canal de communication ; et
   . un premier dispositif périphérique de communication bidirectionnelle, disposé entre lesdits troisièmes moyens de connexion et ladite mémoire de chargement et servant de support au chargement du programme logiciel.

On voit ainsi que ladite seconde partie ainsi perfectionnée peut former un module téléchargeable, c'est-à-dire apte à recevoir de l'extérieur, par l'intermédiaire dudit canal de communication, l'image d'un nouveau programme logiciel modifié et, après effacement du programme logiciel précédent, à reprogrammer ladite mémoire non volatile (par exemple du type Flash EEPROM) dudit bloc mémoire avec ledit nouveau programme logiciel. Un tel module, que l'on peut appeler OBMM (On Board Modifiable Module) par analogie avec les modules OBRM connus, présente donc, par rapport à ces derniers, une plus grande souplesse d'intervention, une réduction des délais d'intervention et une réduction des coûts de stock de matériel. De plus, il n'exige aucune modification de ladite première partie, de sorte qu'un module OBMM conforme à l'invention peut remplacer, par simple échange, un module OBRM antérieur pour apporter une modification au programme logiciel de l'équipement. On peut donc actualiser, en ce qui concerne ledit programme logiciel, les équipements anciens en minimisant :
- les coûts de développement des modifications de logiciel,
- les coûts et les délais de modification des équipements,
- les coûts et les délais de modification des aéronefs,
ainsi qu'en rendant lesdits équipements anciens compatibles avec des architectures futures, basées sur le téléchargement.

Avantageusement, ladite seconde partie comporte de plus :
- des quatrièmes moyens de connexion permettant de recevoir des informations d'autorisation du chargement dudit programme logiciel dans ladite mémoire de chargement ;
- un second dispositif périphérique d'acquisition d'informations d'autorisation, relié auxdits quatrièmes moyens de connexion ; et
- un dispositif logique, relié audit second dispositif périphérique et autorisant le chargement dudit programme logiciel dans ladite mémoire de chargement, seulement lorsque lesdites informations d'autorisation sont présentes sur lesdits quatrièmes moyens de connexion.

De plus, il peut être avantageux que ledit dispositif logique autorise le fonctionnement dudit second dispositif périphérique seulement lorsque lesdites informations d'autorisation sont présentes sur lesdits quatrièmes moyens de connexion.

Ainsi, il est possible de rendre totalement inaccessible ladite mémoire de chargement, et éventuellement ledit premier dispositif périphérique, tant que lesdites informations d'autorisation ne sont pas présentes, et donc de valider ou inhiber à volonté la phase de chargement dudit programme logiciel.

On remarquera, en variante, que lesdites informations d'autorisation, au lieu d'arriver directement sur lesdits quatrièmes moyens de connexion, c'est-à-dire sur le module lui-même, pourraient être délivrées par ledit équipement.

Par ailleurs, ladite mémoire de chargement peut, soit être distincte dudit bloc mémoire, soit être formée par une partie de celui-ci.

De préférence, chacune des deux parties dudit équipement de calcul est enfermée dans un boîtier et lesdits premiers et deuxièmes moyens de connexion sont respectivement montés sur le boîtier de ladite première partie et sur le boîtier de ladite seconde partie, de façon que ladite seconde partie (le module OBMM) soit enfichable sur ladite première partie.

De plus, le boîtier de ladite première partie peut comporter un logement dans lequel peut être emboîté le boîtier de ladite seconde partie.

Les figures du dessin annexé feront bien comprendre comment l'invention peut être réalisée. Sur ces figures, des références identiques désignent des éléments semblables.

La figure 1 est une vue en perspective schématique d'un équipement de calcul pour aéronef, de type connu.

La figure 2 est une vue en coupe longitudinale schématique, agrandie et partielle, selon la ligne II-II de la figure 1.

La figure 3 est une vue en perspective schématique d'un équipement de calcul pour aéronef, conforme à la présente invention.

La figure 4 est une vue en coupe longitudinale schématique, agrandie et partielle, selon la ligne IV-IV de la figure 3.

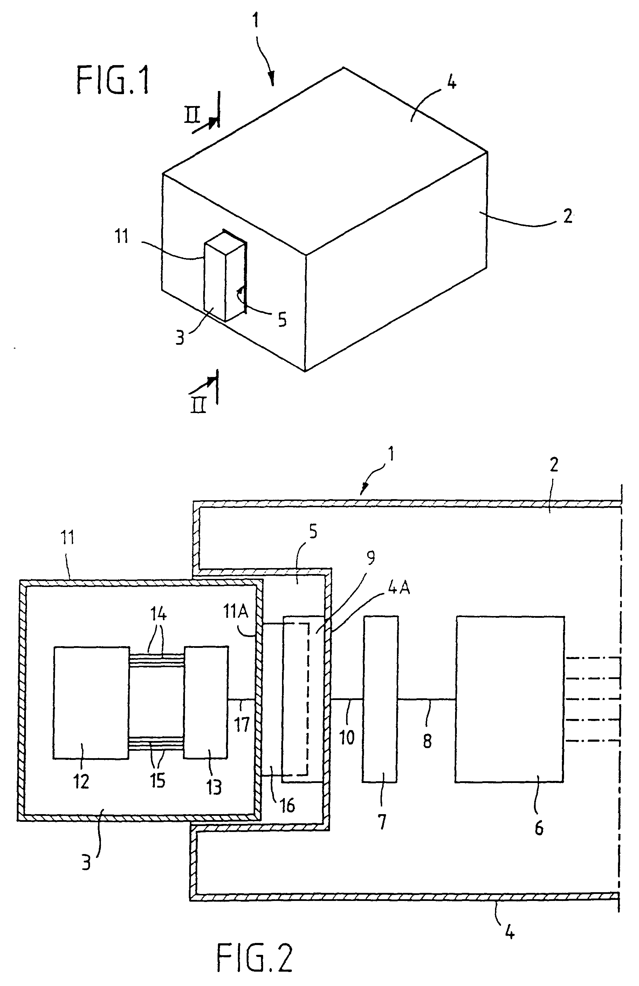

L'équipement de calcul connu 1, montré par les figures 1 et 2, est constitué de deux parties distinctes 2 et 3 reliées, électriquement et mécaniquement, l'une à l'autre de façon amovible.

La première partie 2 comporte un boîtier 4 définissant un logement 5 dans lequel peut être introduite partiellement ou intégralement la seconde partie 3. Le boîtier 4 enferme, entre autres, une unité centrale 6 et une interface électronique d'adressage 7, reliées électriquement l'une à l'autre par une liaison 8. Dans le fond 4A du logement 5, est fixé un connecteur 9, relié à l'interface 7 par une liaison 10.

La seconde partie 3 comporte un boîtier 11 enfermant un bloc mémoire 12 comprenant au moins une mémoire non volatile supportant le programme logiciel de l'équipement 1, et une interface électronique d'adressage 13, reliée audit bloc mémoire 12 par des liaisons de données 14 et des liaisons d'adressage 15. Sur sa face extérieure 11A, dirigée vers le logement 5, le boîtier 11 comporte un connecteur 16, complémentaire du connecteur 9 et relié électriquement à l'interface 13 par une liaison 17.

La forme du boîtier 11 est telle que ladite seconde partie 3 peut s'emboîter dans le logement 5. Lorsque ladite seconde partie est emboîtée à fond dans le logement 5, les connecteurs 9 et 16 coopèrent, de sorte que lesdites première et seconde parties sont alors reliées électriquement et mécaniquement (position représentée sur les figures 1 et 2). En revanche, ladite seconde partie peut être extraite, par traction, hors du logement 5, de sorte qu'alors les deux parties 2 et 3 sont indépendantes l'une de l'autre.

La seconde partie 3 forme donc un module, appelé OBRM, rapportable sur la première partie 2. Lorsque le module 3 est lié, mécaniquement et électriquement, à ladite première partie, l'équipement de calcul 1, et notamment son unité centrale 6, peut mettre en oeuvre le programme logiciel supporté par le bloc mémoire 2, grâce à la coopération de connecteurs 9 et 16 et à celle des interfaces 7 et 13.

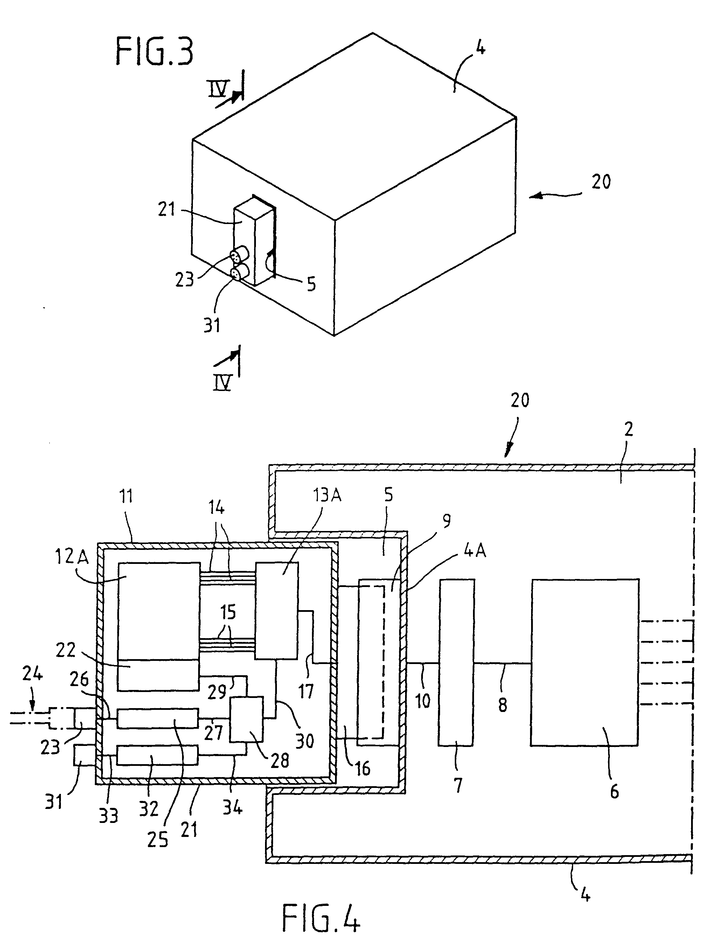

Dans l'équipement de calcul 20, conforme à l'invention et représenté sur les figures 3 et 4, on retrouve à l'identique les éléments 2, 4 à 11 et 14 à 17 décrits ci-dessus pour l'équipement de calcul 1 connu. Ainsi, la première partie 2 de l'équipement 20 est identique à celle de l'équipement 1. En revanche, l'équipement 20 comporte, à la place du module 3, un module 21 différent. Ce module 21 comporte :
- un bloc mémoire 12A, différant du bloc mémoire 12 en ce que la ou les mémoires non volatiles qu'il comporte sont effaçables et programmables électriquement, par exemple du type Flash EEPROM ;
- une interface 13A, différant de l'interface 13, pour pouvoir assurer, en plus des fonctions de ladite interface 13, le dialogue avec le dispositif logique 28, décrit ci-après ;
- des éléments additionnels, à savoir :
   . une mémoire 22 associée audit bloc mémoire 12A et supportant un programme de chargement pour introduire le programme logiciel dudit équipement de calcul 20 dans ledit bloc mémoire 12A ;
   . un connecteur 23, solidaire du boîtier 11 et accessible de l'extérieur lorsque ledit module 21 est en place dans le logement 5, et destiné à être relié à un canal de communication extérieur 24, par exemple une liaison informatique série à haut débit, susceptible de véhiculer ledit programme logiciel ;
   . un périphérique électronique de communication bidirectionnelle avec l'extérieur 25, relié au connecteur 23 par une liaison 26 et susceptible de recevoir ledit programme logiciel ;
   . un dispositif logique de validation 28, autorisant ou interdisant le chargement du programme logiciel dans ladite mémoire 22, ledit dispositif logique 28 étant relié au périphérique 25, à la mémoire 22 et à l'interface 13A respectivement par les liaisons 27, 29 et 30 ;
   . un connecteur 31, solidaire du boîtier 11 et accessible de l'extérieur lorsque le module 21 est en place dans le logement 5 et destiné à recevoir des informations permettant de valider ou inhiber le chargement du programme logiciel dans la mémoire 22 ; et
   . un périphérique électronique 32, relié au connecteur 31 par une liaison 33 et au dispositif logique 28 par une liaison 34.

On comprend qu'ainsi le programme logiciel de l'équipement de calcul 20 peut être introduit et/ou modifié dans la mémoire 22 via le canal de communication 24, le connecteur 23, la liaison 26, le périphérique électronique 25, la liaison 27, le dispositif logique 28, la liaison 29 et la mémoire 22, sous le contrôle, d'une part, de l'interface d'adressage 13A (liaison 30) et, d'autre part, des informations d'autorisation ou d'inhibition transitant par le connecteur 31, la liaison 33, le périphérique électronique 32 et la liaison 34.

Sur la figure 4, on a représenté la mémoire de chargement 22, comme étant distincte du bloc mémoire 12A. Bien entendu, cette mémoire 22 pourrait être formée par une partie dudit bloc mémoire, et donc reprogrammable.

De même, les deux connecteurs 23 et 31, au lieu d'être distincts, comme représenté sur les figures 3 et 4, pourraient être rassemblés dans un connecteur commun. Les informations de validation du chargement du programme logiciel pourraient également provenir de l'équipement de calcul 20, si celui-ci les engendre déjà.

On voit donc que, grâce à la présente invention, on réalise un module 21 enfichable et compatible, électriquement et mécaniquement, avec les modules antérieurs 3, mais téléchargeable grâce aux éléments 22 à 29, sous le contrôle des éléments 31 à 34.

## Revendications

1. Equipement de calcul (20) constitué de deux parties distinctes (2, 21), reliées l'une à l'autre de façon amovible, la première (2) desdites parties comportant, entre autres, l'unité centrale (6) dudit équipement de calcul, des premiers moyens de connexion (9) et un premier dispositif électronique d'interface (7) disposé entre lesdits premiers moyens de connexion et ladite unité centrale, tandis que la seconde (21) desdites parties comporte un bloc mémoire (12A) comprenant au moins une mémoire non volatile supportant tout ou partie du programme logiciel dudit équipement de calcul, des deuxièmes moyens de connexion (16) complémentaires desdits premiers moyens de connexion et un second dispositif électronique d'interface (13A) disposé entre lesdits deuxièmes moyens de connexion et ledit bloc mémoire et susceptible de coopérer avec ledit premier dispositif électronique d'interface, à travers lesdits premiers et deuxièmes moyens de connexion,
caractérisé :
- en ce que ladite mémoire non volatile du bloc mémoire (12A) supportant ledit programme logiciel est effaçable et programmable électriquement ; et
- en ce que ladite seconde partie (21) comporte de plus :
. une mémoire de chargement (22) associée audit bloc mémoire (12A) et supportant un programme de chargement pour introduire ledit programme logiciel dans ledit bloc mémoire (12A) ;
. des troisièmes moyens de connexion (23) permettant la connexion de ladite seconde partie (21) à un canal de communication (24) ; et
. un premier dispositif périphérique de communication bidirectionnelle (25), disposé entre lesdits troisièmes moyens de connexion (23) et ladite mémoire de chargement (22) et servant de support au chargement du programme logiciel.

2. Equipement de calcul selon la revendication 1,
caractérisé en ce que ladite seconde partie (21) comporte de plus :
- des quatrièmes moyens de connexion (31) permettant de recevoir des informations d'autorisation du chargement dudit programme logiciel dans ladite mémoire de chargement (22) ;
- un second dispositif périphérique d'acquisition d'informations d'autorisation (32), relié auxdits quatrièmes moyens de connexion (31) ; et
- un dispositif logique (28), relié audit second dispositif périphérique (32) et autorisant le chargement dudit programme logiciel dans ladite mémoire de chargement (22), seulement lorsque lesdites informations d'autorisation sont présentes sur lesdits quatrièmes moyens de connexion (31).

3. Equipement de calcul selon la revendication 2,
caractérisé en ce que ledit dispositif logique (28) autorise le fonctionnement dudit second dispositif périphérique (32) seulement lorsque lesdites informations d'autorisation sont présentes sur lesdits quatrièmes moyens de connexion (31).

4. Equipement de calcul selon l'une des revendications 1 à 3,
caractérisé en ce que ladite mémoire de chargement (22) est distincte dudit bloc mémoire (12A).

5. Equipement de calcul selon l'une des revendications 1 à 3,
caractérisé en ce que ladite mémoire de chargement (22) fait partie dudit bloc mémoire (12A) et est donc reprogrammable.

6. Equipement de calcul selon l'une quelconque des revendications 1 à 5, dans lequel chacune desdites deux parties est enfermée dans un boîtier (4, 11),
caractérisé en ce que lesdits premiers et deuxièmes moyens de connexion (9, 16) sont respectivement montés sur le boîtier (4) de ladite première partie (2) et sur le boîtier (11) de ladite seconde partie (21), de façon que ladite seconde partie forme un module enfichable sur ladite première partie.

7. Equipement de calcul selon la revendication 6,
caractérisé en ce que le boîtier (4) de ladite première partie (2) comporte un logement (5) dans lequel peut être emboîté le boîtier (11) de ladite seconde partie (21).

## Patentansprüche

1. Recheneinrichtung (20), bestehend aus zwei verschiedenen Teilen (2, 21), die abnehmbar miteinander verbunden sind, wobei der erste (2) der genannten Teile unter anderem die Zentraleinheit (6) der genannten Recheneinrichtung, erste Verbindungsmittel (9) und eine erste elektronische Schnittstellenvorrichtung (7), die zwischen den genannten ersten Verbindungsmitteln und der genannten Zentraleinheit angeordnet ist, umfaßt, wohingegen der zweite (21) der genannten Teile einen Speicherblock (12A), der aus mindestens einem nicht energieabhängigen Speicher besteht, in dem sich das gesamte oder ein Teil des Softwareprogramms der genannten Recheneinrichtung befindet, zweite, die ersten Verbindungsmittel ergänzende Verbindungsmittel (16) sowie eine zweite elektronische Schnittstellenvorrichtung (13A) umfaßt, die zwischen den genannten zweiten Verbindungsmitteln und dem genannten Speicherblock angeordnet ist und über die genannten ersten und zweiten Verbindungsmittel mit der genannten ersten elektronischen Schnittstellenvorrichtung zusammenwirken kann,
dadurch gekennzeichnet,
- daß der genannte nicht energieabhängige Speicher des Speicherblocks (12A), in dem sich das genannte Softwareprogramm befindet, elektrisch löschbar und programmierbar ist; und
- daß der genannte zweite Teil (21) weiterhin folgendes umfaßt:
• einen Ladespeicher (22), der dem genannten Speicherblock (12A) zugeordnet ist und in dem sich ein Ladeprogramm befindet zur Eingabe des genannten Softwareprogramms in den genannten Speicherblock (12A);
• dritte Verbindungsmittel (23), die die Verbindung des genannten zweiten Teils (21) mit einem Kommunikationskanal (24) ermöglichen; und
• eine erste periphere Zweirichtungskommunikationsvorrrichtung (25), die zwischen den genannten dritten Verbindungsmitteln (23) und dem genannten Ladespeicher (22) angeordnet ist und als Unterstützung beim Laden des Softwareprogramms dient.

2. Recheneinrichtung nach Anspruch 1,
dadurch gekennzeichnet, daß der genannte zweite Teil (21) weiterhin folgendes umfaßt:
- vierte Verbindungsmittel (31), die es ermöglichen, Freigabedaten für das Laden des genannten Softwareprogramms in den genannten Ladespeicher (22) zu erhalten;
- eine zweite periphere Freigabedatenerfassungseinrichtung (32), die mit den genannten vierten Verbindungsmitteln (31) verbunden ist; und
- eine Logikvorrichtung (28), die mit der genannten zweiten peripheren Vorrichtung (32) verbunden ist und das Laden des genannten Softwareprogramms in den genannten Ladespeicher (22) nur dann freigibt, wenn die genannten Freigabedaten an den genannten vierten Verbindungsmitteln (31) vorliegen.

3. Recheneinrichtung nach Anspruch 2,
dadurch gekennzeichnet, daß die genannte Logikeinrichtung (28) den Betrieb der genannten zweiten peripheren Einrichtung (32) nur dann freigibt, wenn die genannten Freigabedaten an den genannten vierten Verbindungsmitteln (31) vorliegen.

4. Recheneinrichtung nach einem der Ansprüche 1 bis 3,
dadurch gekennzeichnet, daß sich der genannte Ladespeicher (22) vom genannten Speicherblock (12A) unterscheidet.

5. Recheneinrichtung nach einem der Ansprüche 1 bis 3,
dadurch gekennzeichnet, daß der genannte Ladespeicher (22) Bestandteil des genannten Speicherblocks (12A) und somit programmierbar ist.

6. Recheneinrichtung nach einem beliebigen der Ansprüche 1 bis 5, in dem jeder der genannten beiden Teile in einem Gehäuse (4, 11) eingeschlossen ist,
dadurch gekennzeichnet, daß die genannten ersten und zweiten Verbindungsmittel (9, 16) jeweils auf dem Gehäuse (4) des genannten ersten Teils (2) und auf dem Gehäuse (11) des genannten zweiten Teils (21) so montiert sind, daß der genannte zweite Teil ein auf den er-sten Teil aufsteckbares Modul bildet.

7. Recheneinrichtung nach Anspruch 6,
dadurch gekennzeichnet, daß das Gehäuse (4) des genannten er-sten Teils (2) eine Aufnahme (5) umfaßt, in die der genannte zweite Teil (21) eingesteckt werden kann.

## Claims

1. A computational rig (20) consisting of two distinct parts (2, 21), linked together in a removable manner, the first (2) of said parts including, among other things, the central processing unit (6) of said computational rig, first means of connection (9) and a first electronic interface device (7) arranged between said first means of connection and said central processing unit, whilst the second (21) of said parts includes a memory block (12A) comprising at least one non-volatile memory supporting all or part of the software program of said computational rig, second means of connection (16) complementary to said first means of connection and a second electronic interface device (13A) arranged between said second means of connection and said memory block and able to cooperate with said first electronic interface device, through said first and second means of connection,
characterized in that:
- said non-volatile memory of the memory block (12A) supporting said software program is electrically erasable and programmable; and
- said second part (21) moreover includes:
. a loading memory (22) associated with said memory block (12A) and supporting a loading program for entering said software program into said memory block (12A);
. third means of connection (23) allowing the connection of said second part (21) to a communication channel (24); and
. a first bidirectional communication peripheral device (25), arranged between said third means of connection (23) and said loading memory (22) and serving as support in the loading of the software program.

2. The computational rig as claimed in claim 1,
characterized in that said second part (21) moreover includes:
- fourth means of connection (31) making it possible to receive information for authorizing the loading of said software program into said loading memory (22) ;
- a second authorization information acquisition peripheral device (32), linked to said fourth means of connection (31); and
- a logic device (28), linked to said second peripheral device (32) and authorizing the loading of said software program into said loading memory (22), only when said authorization information is present on said fourth means of connection (31).

3. The computational rig as claimed in claim 2,
characterized in that said logic device (28) authorizes operation of said second peripheral device (32) only when said authorization information is present on said fourth means of connection (31).

4. The computational rig as claimed in one of claims 1 to 3,
characterized in that said loading memory (22) is distinct from said memory block (12A).

5. The computational rig as claimed in one of claims 1 to 3,
characterized in that said loading memory (22) forms part of said memory block (12A) and is therefore reprogrammable.

6. The computational rig as claimed in any one of claims 1 to 5, in which each of said two parts is enclosed in a box (4, 11),
characterized in that said first and second means of connection (9, 16) are respectively mounted on the box (4) of said first part (2) and on the box (11) of said second part (21), so that said second part forms a plug-in module for said first part.

7. The computational rig as claimed in claim 6,
characterized in that the box (4) of said first part (2) includes a housing (5) with which the box (11) of said second part (21) can be interlocked.
